# EUROPEAN PATENT APPLICATION

(11) **EP 4 236 084 A1**
(43) Date of publication of application: **30.08.2023**
(21) Application number: 21897128.1
(22) Date of filing: 26.11.2021
(51) Int. Cl.: H04B 1/04

(54) **RADIO FREQUENCY CHIP AND SIGNAL FEEDBACK METHOD PERFORMED BY MEANS OF RADIO FREQUENCY CHIP**

(30) Priority: 26.11.2020 CN 202011348059
(71) Applicant: Huawei Technologies Co., Ltd., Shenzhen, Guangdong 518129 (CN)
(72) Inventor: DING, Wenqi, Shenzhen, Guangdong 518129 (CN); ZHOU, Xiaomin, Shenzhen, Guangdong 518129 (CN); ZHANG, Lie, Shenzhen, Guangdong 518129 (CN); ZHOU, Qian, Shenzhen, Guangdong 518129 (CN)
(74) Representative: Thun, Clemens
(86) International application number: PCT/CN2021/133464
(87) International publication number: WO 2022/111628

(57) **Abstract**

This application discloses a radio frequency chip and a method for feeding back a signal by using a radio frequency chip, and is specifically applied to the field of communication technologies. The radio frequency chip includes a signal transmission module and a feedback module, where an end of the signal transmission module is connected to a transceiver antenna, and is connected to an input end of the feedback module by using a coupler; the signal transmission module is configured to provide at least one transmission channel, where the transmission channel is for transmitting a traffic signal, and the traffic signal includes a sending signal sent by a digital processing unit; and the feedback module is configured to provide a feedback channel, where the feedback channel is for transmitting, to the digital processing unit, a feedback signal corresponding to the sending signal.

## Description

This application claims priority to Chinese Patent Application No. 202011348059.1, filed with the China National Intellectual Property Administration on November 26, 2020 and entitled "RADIO FREQUENCY CHIP AND METHOD FOR FEEDING BACK SIGNAL BY USING RADIO FREQUENCY CHIP", which is incorporated herein by reference in its entirety.

### TECHNICAL FIELD

Embodiments of this application relate to the field of communication technologies, and in particular, to a radio frequency chip and a method for feeding back a signal by using a radio frequency chip.

### BACKGROUND

With rapid development of 5th-generation (5th-Generation, 5G) mobile communication technologies, 5G high band millimeter wave (mmWave) network planning is placed on the agenda. For a 5G millimeter wave base station, increasing a signal output power and expanding base station coverage have become an urgent requirement. However, because a frequency of a mmWave electromagnetic wave is high, a digital signal causes a great loss on a transmit channel (power amplification). In addition, a non-linear feature of the transmit channel further causes distortion of the digital signal. Consequently, a signal-to-noise ratio of a transmitted signal is reduced, and finally the output power of the base station is restricted.

A digital pre-distortion (digital pre-distortion, DPD) technology is a method for improving a radio transmit signal. A basic principle of the digital pre-distortion technology is compensating for distortion or the loss of the transmit channel by generating information opposite to the distortion or the loss of the transmit channel. Specifically, a digital processing unit needs to collect an input signal and an output signal of a transmission channel at a current moment to perform processing, and updates a DPD coefficient of the transmission channel in real time through adaptive processing, to compensate for the input signal. That is, the output signal needs to be fed back to the digital processing unit in real time.

In a current millimeter wave system, the output signal is fed back by adding a coupler and a plurality of analog feedback channels to a board level. This causes system design complexity, and increases manufacturing costs. Therefore, how to simplify a design of the current millimeter wave system and reduce the costs becomes a problem that needs to be urgently resolved.

### SUMMARY

Embodiments of this application provide a radio frequency chip and a method for feeding back a signal by using a radio frequency chip, to simplify a current structure of a feedback channel and reduce system design complexity and costs.

A first aspect of embodiments of this application provides a radio frequency chip.

The radio frequency chip includes a signal transmission module and a feedback module. One end of the signal transmission module is connected to a digital processing unit, and the other end is connected to a transceiver antenna. The signal transmission module is configured to transmit a receiving signal or a sending signal. Then, the end connected to the transceiver antenna is connected to an input end of the feedback module by using a coupler. It may be understood that the feedback module is configured to transmit a feedback signal corresponding to the sending signal to the digital processing unit, so that the digital processing unit updates a DPD coefficient of a transmission channel in real time based on the feedback signal, to compensate for the sending signal. Therefore, an output end of the feedback module is connected to the digital processing unit.

In the foregoing chip structure, the feedback module provides a feedback channel for the feedback signal, and the feedback channel is integrated into the interior of the radio frequency chip. In this way, the output end of the feedback module in the radio frequency chip may be directly connected to the digital processing unit, so that transmission of the feedback signal can be completed. There is no need to design an inter-board-level coupler, design complexity of an entire radio frequency system is reduced, feedback channels of radio frequency chips are independent of each other, interference is reduced, and board-level design costs are reduced.

In a possible implementation of the first aspect, the signal transmission module further includes an amplification module and a phase shift module inside. The amplification module is connected to the phase shift module. One end of the amplification module is connected to the digital processing unit, and one end of the phase shift module is connected to the transceiver antenna. The amplification module, as a front-end common part of the radio frequency chip, may provide a plurality of transmission channels for the radio frequency chip, where the transmission channels include a transmission channel for receiving a signal and a transmission channel for sending the signal. In addition, the transmission channel may further include an amplifier, configured to amplify the signal. The phase shift module is configured to perform phase shift on the signal, and may provide a plurality of transmission branches. Each transmission branch includes a phase shifter that may change a phase of the sending signal, to ensure transmission of the sending signal in full space. In addition, the phase shift module may further include an attenuator and an amplifier, that is, perform gain adjustment on the transmitted signal, finally send the sending signal to the transceiver antenna, and send the sending signal to the outside. It may be understood that the phase shift module may be further configured to transmit the receiving signal. That is, the transceiver antenna receives the signal, and transmits the receiving signal to the phase shift module, and the phase shift module transmits the receiving signal to the digital processing unit after performing phase retrieval on the receiving signal.

In the foregoing design, the signal transmission module provides the plurality of transmission channels, and may process the transmitted signal, so that transmission performance of the radio frequency chip is improved.

In a possible implementation of the first aspect, the phase shift module provides the plurality of transmission branches, each transmission branch may process and transmit the sending signal, and an end of the transmission branch is connected to the transceiver antenna. In this way, the end of the transmission branch is connected to the input end of the feedback module by using the coupler based on a requirement, to ensure that a feedback signal of each sending signal can be transmitted to the digital processing unit, to complete compensation for the sending signal.

In a possible implementation of the first aspect, the transmission branch of the phase shift module includes the phase shifter and an adjuster. The phase shifter is configured to perform phase shift processing on the transmitted sending signal, change the phase of the sending signal, and transmit the sending signal to the transceiver antenna. The adjuster may include an attenuator or an amplifier, and is configured to perform gain adjustment processing on the transmitted signal.

In a possible implementation of the first aspect, the feedback module in the radio frequency chip also includes a plurality of feedback branches. The transmission branch provided by the signal transmission module corresponds to one feedback branch for transmitting a feedback signal of the sending signal transmitted on the transmission branch. The plurality of feedback branches are converged in a transceiver selection switch. The transceiver selection switch controls enabling and disabling of each feedback channel. The other end of the transceiver selection switch is connected to the digital processing unit. That is, the transceiver selection switch selects a feedback signal connected to the digital processing unit.

In a possible implementation of the first aspect, the transceiver selection switch further includes a phase shifter on a branch connected to the digital processing unit. The phase shifter is for performing phase retrieval on a sending signal on which the phase shift module performs phase shift, so that the digital processing unit can more accurately compensate for the sending signal. In addition, the structure is used so that the plurality of feedback branches can share the phase shifter. This simplifies the structure of the radio frequency chip, and increases costs.

In a possible implementation of the first aspect, the transceiver selection switch further includes an adjuster on the branch connected to the digital processing unit. The adjuster may include an attenuator or an amplifier, and is configured to perform gain adjustment processing on the feedback signal on the feedback branch. Likewise, the structure is used, so that the plurality of feedback branches can share the adjuster. This simplifies the structure of the radio frequency chip, and increases costs.

In a possible implementation of the first aspect, the feedback module still includes a plurality of feedback branches. The transmission branch provided by the signal transmission module corresponds to one feedback branch. However, each of the plurality of feedback branches includes a phase shifter, configured to perform phase retrieval on a feedback signal on the feedback branch.

In a possible implementation of the first aspect, each of the plurality of feedback branches in the feedback module includes an adjuster, configured to perform gain adjustment processing on the feedback signal on the feedback branch.

In a possible implementation of the first aspect, the feedback module further includes a combiner. The feedback branch is connected to the combiner. The combiner combines a plurality of feedback signals on the plurality of feedback branches, and feeds back the plurality of feedback signals to the digital processing unit. In this way, a gain of the feedback signals is increased, and transmission efficiency of the feedback signals is improved.

A second aspect of embodiments of this application provides a method for feeding back a signal by using a radio frequency chip, where the radio frequency chip includes a signal transmission module and a feedback module, and the method includes:
receiving, via the first end of the signal transmission module, a traffic signal sent by a digital processing unit, where an end of the signal transmission module is connected to a transceiver antenna, and is connected to an input end of the feedback module by using a coupler;
transmitting the traffic signal through a transmission channel, and sending the traffic signal through the transceiver antenna, where the signal transmission module is configured to provide at least one transmission channel, and the traffic signal includes a sending signal sent by the digital processing unit; and
obtaining a feedback signal corresponding to the traffic signal, and transmitting the feedback signal to the digital processing unit via the feedback module, where the feedback module is configured to provide a feedback channel.

A third aspect of embodiments of this application provides a radio frequency system, where the radio frequency system includes a plurality of radio frequency chips, a plurality of frequency mixing units, a plurality of combiners, and a digital processing unit, where
the plurality of radio frequency chips and the digital processing unit each include a transceiver interface and a feedback interface, the feedback ports of the plurality of radio frequency chips are connected to the feedback interface of the digital processing unit by using a first combiner and a first frequency mixing unit, the transceiver interfaces of the plurality of radio frequency chips are connected to the transceiver interface of the digital processing unit by using a second combiner and a second frequency mixing unit, and the plurality of combiners include the first combiner and the second combiner;
the digital processing unit is configured to send a service sending signal to the radio frequency chip through the transceiver interface of the digital processing unit, or receive, through the transceiver interface, a service receiving signal transmitted by the radio frequency chip;
the digital processing unit is further configured to receive, through the feedback interface of the digital processing unit, a feedback signal corresponding to the service sending signal, and perform signal compensation on the service sending signal by using the feedback signal; and
the radio frequency chip is configured to provide a transmission channel and a feedback channel, where the transmission channel is for transmitting the service sending signal and/or the service receiving signal, and the feedback channel is for sending, through the feedback interface of the radio frequency chip, the feedback signal corresponding to the service sending signal.

A fourth aspect of embodiments of this application provides a computer-readable storage medium, including a program. When the program is run on a computer, the computer is enabled to perform the method according to the second aspect.

A fifth aspect of embodiments of this application provides a circuit system. The circuit system includes a processing circuit. The processing circuit is configured to perform the method according to the second aspect.

It can be learned from the foregoing technical solutions that embodiments of this application have the following advantages.

For the radio frequency chip provided in embodiments of this application, the feedback channel is integrated into the interior of the radio frequency chip, and the feedback interface of the radio frequency chip may be connected to the data processing unit by using the frequency mixing unit. In this way, there is no need to design the inter-board-level coupler, the structure of the entire radio frequency system is simplified, and integration of the radio frequency chip is improved. In addition, an increase of the feedback channel can enable the digital processing unit to receive the feedback signal of the service sending signal, perform data processing based on a DPD feature, compensate for the service sending signal, reduce a loss and distortion of the service sending signal on the transmission channel, increase an output power of the entire radio frequency system, and expand coverage of the sending signal corresponding to the entire radio frequency system.

### BRIEF DESCRIPTION OF DRAWINGS

FIG. 1 is a schematic diagram of a structure of a radio frequency system according to an embodiment of this application;
FIG. 2 is a schematic diagram of a structure of a radio frequency chip according to an embodiment of this application;
FIG. 3 is a schematic diagram of a structure of another radio frequency chip according to an embodiment of this application;
FIG. 4 shows a method for feeding back a signal by using a radio frequency chip according to an embodiment of this application; and
FIG. 5 is a diagram of a system architecture of a radio frequency system according to an embodiment of this application.

### DESCRIPTION OF EMBODIMENTS

Embodiments of this application provide a radio frequency chip and a method for feeding back a signal by using a radio frequency chip, to simplify a current structure of a feedback channel and reduce system design complexity and costs.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way is interchangeable in appropriate circumstances, so that embodiments described herein can be implemented in orders other than the order illustrated or described herein. In addition, the terms "include", "have", and any variant thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.

This application is mainly applied to analog beamforming (analog beamforming, ABF) in a 5G high band millimeter wave or integrated into an antenna in PCB (antenna in PCB, AIP) system, to provide a new ABF/AIP chip architecture, thereby simplifying a system structure and reducing system design complexity and costs.

DPD is a method for improving a radio transmit signal. A basic principle of the DPD is compensating for distortion or a loss of a transmit channel by generating information opposite to the distortion or the loss of the transmit channel. Specifically, a digital processing unit sends a traffic signal to a transmission channel. After the traffic signal is transmitted through the transmission channel, an output signal needs to be fed back to the digital processing unit. Then, the digital processing unit compares the output signal with an initial sending signal, determines a compensation policy based on a comparison result, and then performs real-time compensation on the traffic signal in transmission.

It may be understood that, when the output signal is fed back to the data processing unit, a feedback channel is needed to transmit the output signal. An existing ABF/AIP chip generally integrates only an intermediate frequency module and a radio frequency module. When a feedback signal needs to be transmitted to the digital processing unit, a DPD requirement is resolved basically by adding a coupler to a board level and designing a plurality of feedback channels. This brings design complexity and costs of an entire system. Therefore, simplifying a design of a current millimeter wave system and reducing the costs become problems that need to be urgently resolved.

Based on the foregoing problem, embodiments of this application provide a new ABF/AIP chip architecture. A feedback channel is integrated into the interior of a chip. A feedback interface of the chip is directly connected to a digital processing unit. In this way, a board-level feedback channel does not need to be designed, a structure of a radio frequency system is simplified, and costs of the radio frequency system are reduced.

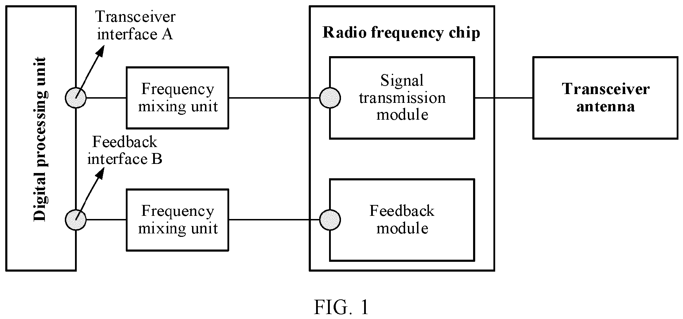

FIG. 1 is a schematic diagram of a structure of a radio frequency system according to an embodiment of this application. As shown in FIG. 1, the radio frequency system includes a digital processing unit, frequency mixing units, a radio frequency chip, and a transceiver antenna. The digital processing unit includes a transceiver interface A and a feedback interface B, and the radio frequency chip includes a signal transmission module and a feedback module.

The transceiver interface A of the digital processing unit is connected to one end of the signal transmission module by using a frequency mixing unit, and the other end of the signal transmission module is connected to the transceiver antenna. The feedback interface B of the digital processing unit is connected to one end of the feedback module by using a frequency mixing unit, and the other end of the feedback module is connected to the signal transmission module by using a coupler.

The signal transmission module in the radio frequency chip is configured to provide a transmission channel of a traffic signal. When the digital processing unit sends a service sending signal to the outside, the service sending signal is transmitted to the transceiver antenna via the signal transmission module, and then the transceiver antenna transmits the service sending signal. The signal transmission module may further transmit a service receiving signal to the signal transmission module. To be specific, the transceiver antenna receives the service receiving signal, and transmits the service receiving signal to the digital processing unit via the signal transmission module. For example, the signal transmission module may include a plurality of transmission channels. An end of each transmission channel may be connected to the transceiver antenna. The service sending signal and the service receiving signal may be simultaneously transmitted on different transmission channels of the signal transmission module. This is not specifically limited.

The feedback module in the radio frequency chip is configured to provide a feedback channel. The feedback channel is for transmitting feedback information of the service sending signal. That is, after the service sending signal sent by the digital processing unit passes through the signal transmission module, an output signal (a feedback signal) of the signal transmission module needs to be fed back to the digital processing unit. In this way, the digital processing unit can determine statuses of a loss and distortion of the service sending signal on the transmission channel based on the feedback signal, and compensate for the service sending signal in time, to improve an output power of the service sending signal and precision of the output power, thereby expanding coverage of the service sending signal.

The frequency mixing unit is configured to perform spectrum shifting on a signal, and includes a frequency mixer. For example, when the digital processing unit sends a sending signal to the outside, a low-frequency signal needs to be converted into a radio frequency signal. When the digital processing unit receives a receiving signal or the feedback signal, the frequency mixing unit needs to convert a high-frequency receiving signal or feedback signal into a low-frequency signal, so that the digital processing unit processes the low-frequency signal.

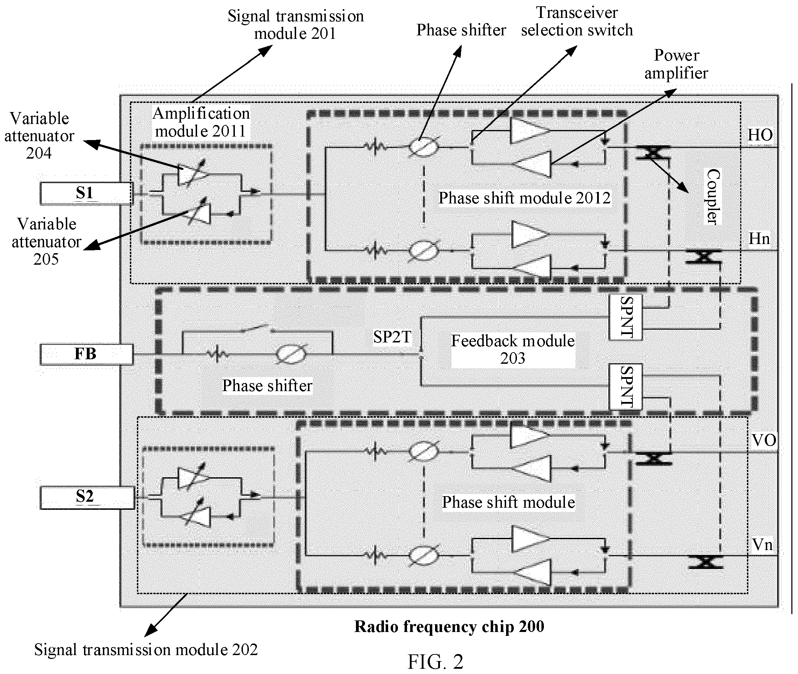

FIG. 2 is a schematic diagram of a structure of a radio frequency chip according to an embodiment of this application. As shown in FIG. 2, the radio frequency chip 200 includes a signal transmission module 201, a signal transmission module 202, and a feedback module 203. The signal transmission module 201 includes an amplification module 2011 and a phase shift module 2012.

### (1) Amplification module:

One end of the amplification module 2011 is a transceiver interface S1 of the radio frequency chip. The interface S1 is for connecting to a transceiver interface of a digital processing unit, and is for transmitting a service sending signal or a service transmission signal. The other end is connected to the phase shift module 2012.

The amplification module 2011 is a forward common end of the chip, and may include variable attenuators and a channel selection switch. The channel selection switch is configured to select a plurality of transmission branches. The variable attenuator is configured to amplify or attenuate a traffic signal on the branch, that is, adjust a gain of the signal. It may be understood that the amplification module 2011 is configured to provide a receiving channel and a sending channel. For example, a branch on which a variable attenuator 204 is located is a sending channel, and a branch on which a variable attenuator 205 is located is a receiving channel.

### (2) Phase shift module:

One end of the phase shift module 2012 is connected to the amplification module 2011, and the other end is a transceiver interface on the other side of the radio frequency chip. The transceiver interface on the side is for connecting to a transceiver antenna. It may be understood that interfaces *H*₀ to *Hₙ* in FIG. 2 are all connected to the transceiver antenna.

The phase shift module 2012 is configured to perform phase shift on a transmitted traffic signal, and may include a power splitter, a transceiver selection switch, a variable attenuator, a power amplifier, and a phase shifter. The power splitter is a power divider, and may divide one channel of signals transmitted by the amplification module 2011 into a plurality of channels of equal or unequal signals. After the amplification module 2011 transmits service sending signals to the phase shift module 2012, the power splitter in the phase shift module 2012 may divide the service sending signals into a plurality of channels of sending signals.

The phase shifter is an apparatus that can adjust a phase of an electromagnetic wave, and a function of the phase shifter is moving a phase of a signal by an angle, to ensure that a service sending signal sent by the transceiver antenna can cover all space. It may be understood that the phase shift module 2012 may provide a plurality of transmission branches, a transceiver signal is connected to an end of each transmission branch, and the transmission branch includes a phase shifter. These phase shifters perform phase adjustment on service sending signals, and then send the service sending signals through the transceiver antenna.

It may be understood that the transceiver selection switch in the phase shift module 2012 is configured to provide the plurality of transmission branches, and each transmission branch may include apparatuses such as the variable attenuator and the power amplifier. These apparatuses are configured to perform power amplification or attenuation on a traffic signal on the transmission branch, to satisfy a power requirement of the digital processing unit for the traffic signal.

In FIG. 2, the signal transmission module 202 and the signal transmission module 201 have similar structures, and are both configured to provide a plurality of service transmission channels. A transceiver port S2 corresponding to the signal transmission module 202 and a transceiver port S 1 have a same function. For a specific internal structure of the signal transmission module 202, refer to the signal transmission module 201. Details are not described herein. A difference lies in that a transceiver antenna connected to the signal transmission module 202 and a transceiver antenna connected to the signal transmission module 201 have different polarities, and a structure of the radio frequency chip is symmetrical based on a multi-polarization design. For example, if the transceiver antenna connected to the signal transmission module 201 is a vertically polarized antenna, a polarization direction of the transceiver antenna connected to the signal transmission module 202 may be horizontal polarization.

### (3) Feedback module:

The feedback module 203 is configured to provide a feedback channel. To be specific, after a service sending signal is transmitted via the signal transmission module, an output signal of the signal transmission module needs to be fed back to the digital processing unit through the feedback channel. The feedback module 203 includes a plurality of feedback branches. To be specific, each transmission branch of the signal transmission module corresponds to one feedback branch, and the transmission branch and the feedback branch are connected to each other by using a coupler.

The feedback module 203 further includes a single-pole N-throw switch SPNT and a single-pole double-throw switch SP2T. The SPNT is configured to perform selection on N feedback branches corresponding to one signal transmission module, and the SP2T is configured to perform selection on feedback branches corresponding to antennas in different polarization directions. In this way, at a same moment, the feedback module ensures that one feedback branch is connected, and transmits a feedback signal on the feedback branch.

The feedback module 203 may further include a phase shifter and a variable attenuator. The phase shifter may perform phase cancellation with the phase shifter in the phase shift module, to implement online DPD feature training of a system, and improve a capability of an output power of the system. It may be understood that, in the feedback module 203 shown in FIG. 2, the plurality of feedback branches share the phase shifter. In this way, design complexity of the feedback module 203 can be simplified, and design costs can be reduced.

For the radio frequency chip, the feedback channel is integrated into the interior of the radio frequency chip, and a feedback interface FB of the radio frequency chip may be connected to the data processing unit by using a frequency mixing unit. In this way, there is no need to design a board-level coupler, a structure of an entire radio frequency system is simplified, and integration of the radio frequency chip is improved. In addition, an increase of the feedback channel can enable the digital processing unit to receive a feedback signal of the service sending signal, perform data processing based on a DPD feature, compensate for the service sending signal, reduce a loss and distortion of the service sending signal on a transmission channel, increase the output power of the entire radio frequency system, and expand coverage of the sending signal corresponding to the entire radio frequency system.

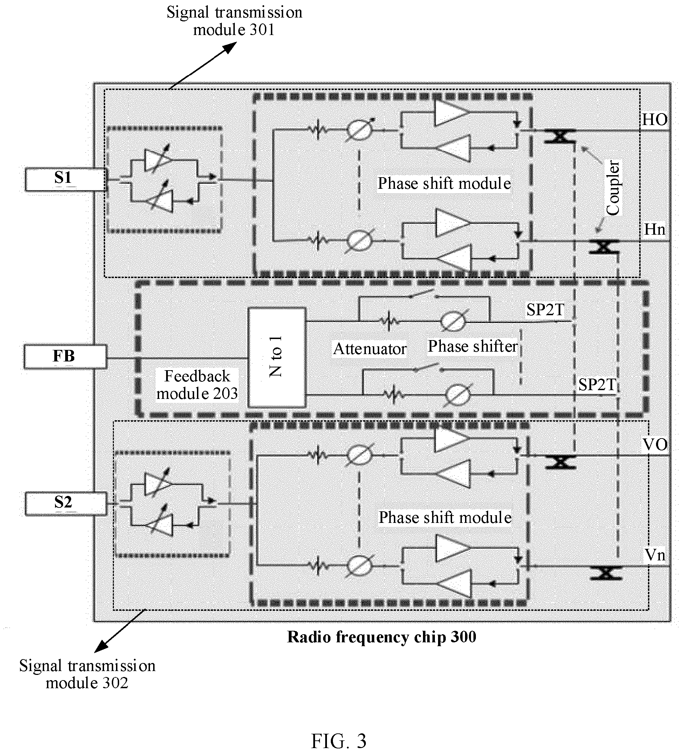

FIG. 3 is a schematic diagram of a structure of another radio frequency chip according to an embodiment of this application. As shown in FIG. 3, the radio frequency chip 300 also includes a signal transmission module 301, a signal transmission module 302, and a feedback module 303. The transmission module 301 includes an amplification module and a phase shift module.

It may be understood that structures of the signal transmission module 301 and the signal transmission module 302 are similar to those of the signal transmission module 201 and the signal transmission module 202 in the embodiment shown in FIG. 2, and functions of specific elements are also similar to those of the elements in the foregoing embodiment. Details are not described herein. The following describes the feedback module 303 in detail.

The feedback module 303 includes a plurality of feedback branches. All transmission branches of the signal transmission module are in a one-to-one correspondence with the plurality of feedback branches. Each feedback branch includes a single-pole double-throw switch SP2T, configured to perform selection on two transmission branches in different polarization directions. The feedback branch may include a phase shifter and a variable attenuator. That is, in the embodiment shown in FIG. 3, the feedback branches no longer share a phase shifter, but may perform phase shift processing and gain adjustment processing on a plurality of feedback signals simultaneously. Finally, the plurality of feedback branches are all connected to a combiner. The combiner combines feedback signals on the plurality of feedback branches into one channel of feedback signals for transmission to a data processing unit. It may be understood that a signal-to-noise ratio of the feedback signal is increased by N times. This helps improve a capability of the data processing unit to compensate for a service sending signal.

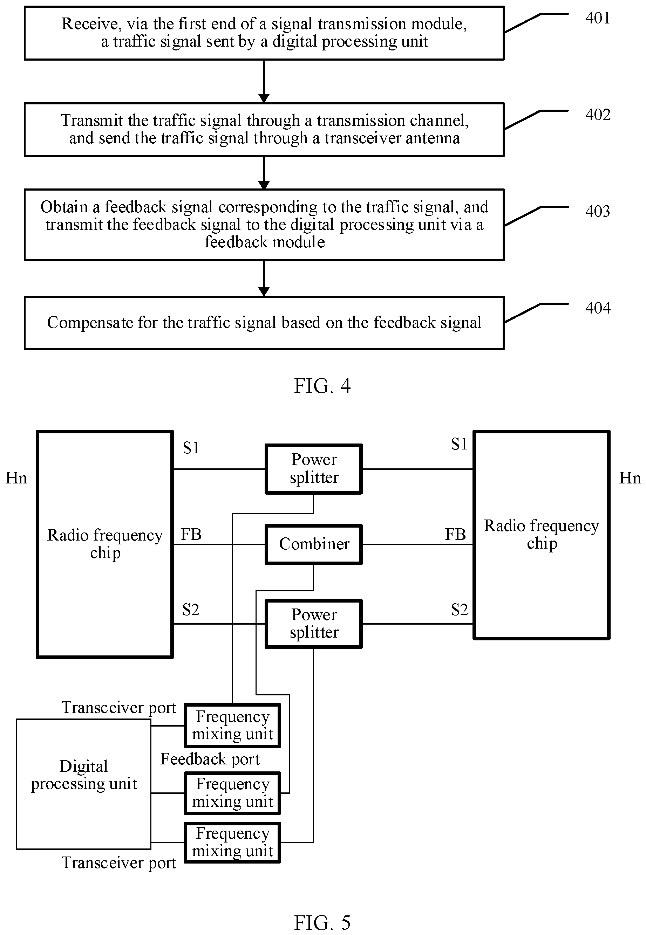

FIG. 4 is a method for feeding back a signal by using a radio frequency chip according to an embodiment of this application. The radio frequency chip includes a signal transmission module and a feedback module. The method includes the following steps.

401: Receive, via the first end of the signal transmission module, a traffic signal sent by a digital processing unit.

An end of the signal transmission module is connected to a transceiver antenna, and is connected to an input end of the feedback module by using a coupler.

402: Transmit the traffic signal through a transmission channel, and send the traffic signal through the transceiver antenna.

The signal transmission module is configured to provide at least one transmission channel, and the traffic signal includes a sending signal sent by the digital processing unit.

403: Obtain a feedback signal corresponding to the traffic signal, and transmit the feedback signal to the digital processing unit via the feedback module.

The feedback module is configured to provide a feedback channel. It may be understood that a structure of the radio frequency chip is the same as that of the radio frequency chip in the embodiment shown in FIG. 2 or FIG. 3. Details are not described again.

404: Compensate for the traffic signal based on the feedback signal.

After obtaining the feedback signal, the digital processing unit determines, based on the feedback signal and an initial sending signal, statuses of a loss and distortion of the traffic signal on the transmission channel, and then compensates for the traffic signal by using a DPD feature, to improve an output power and coverage of a radio frequency system.

FIG. 5 is a diagram of a system architecture of a radio frequency system according to an embodiment of this application. The radio frequency system includes a plurality of radio frequency chips and a digital processing unit.

A transceiver port *Hₙ* of each radio frequency chip is connected to a transceiver antenna, and transceiver ports *S*₁ and *S*₂ at the other end are both connected to transceiver ports of the digital processing unit by using power splitters and frequency mixing units. It may be understood that the path is for transmitting a traffic signal. A function of a power splitter is combining a plurality of traffic signals into one channel of signals or splitting one channel of signals into a plurality of channels of signals. The frequency mixing unit may include a frequency mixer, and is configured to perform frequency shift on a traffic signal that passes through the frequency mixing unit. For example, the frequency mixing unit converts a low frequency signal sent by the digital processing unit into a radio frequency signal, converts a receiving signal received from the outside into a low frequency signal, and then transmits the low frequency signal to the digital processing unit.

A feedback port FB of the radio frequency chip is connected to a feedback port of the digital processing unit by using a frequency mixing unit. The path is a feedback channel. Feedback ports FBs of the plurality of radio frequency chips are connected to the feedback port of the digital processing unit by using a combiner. That is, a plurality of feedback signals may be combined into one channel of signals and transmitted to the digital processing unit. The frequency mixing unit may include a frequency mixer, and is configured to perform frequency mixing on the plurality of feedback signals.

It may be understood that, for a structure of each radio frequency chip in the radio frequency system, refer to the structure of the radio frequency chip in the embodiment shown in FIG. 2 or FIG. 3. Details are not described herein.

According to the method provided in embodiments of this application, this application further provides a computer-readable storage medium, including a program. When the program is run on a computer, the computer is enabled to perform the method in the embodiment shown in FIG. 4.

According to the method provided in embodiments of this application, this application further provides a circuit system. The circuit system includes a processing circuit. The processing circuit is configured to perform the method in the embodiment shown in FIG. 4.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions in this application essentially, the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the method in embodiments of this application. The foregoing storage medium includes: any medium that can store program code, such as a USB flash drive, a removable hard disk, a read-only memory (ROM, read-only memory), a random access memory (RAM, random access memory), a magnetic disk, or an optical disc.

## Claims

1. A radio frequency chip, wherein the radio frequency chip comprises a signal transmission module and a feedback module, wherein
an end of the signal transmission module is connected to a transceiver antenna, and is connected to an input end of the feedback module by using a coupler;
the signal transmission module is configured to provide at least one transmission channel, wherein the transmission channel is for transmitting a traffic signal, and the traffic signal comprises a sending signal sent by a digital processing unit; and
the feedback module is configured to provide a feedback channel, wherein the feedback channel is for transmitting, to the digital processing unit, a feedback signal corresponding to the sending signal.

2. The radio frequency chip according to claim 1, wherein the signal transmission module comprises an amplification module and a phase shift module, wherein
an end of the amplification module is connected to the first end of the phase shift module, and the second end of the phase shift module is connected to the transceiver antenna, and is connected to the input end of the feedback module by using the coupler;
the amplification module is configured to amplify and transmit the sending signal; and
the phase shift module is configured to transmit the sending signal, and perform phase shift processing on the sending signal.

3. The radio frequency chip according to claim 2, wherein the phase shift module comprises a plurality of transmission branches, wherein
the first end of each transmission branch is connected to the end of the amplification module; and
the second end of the transmission branch is connected to the transceiver antenna, and the second end of the transmission branch is connected to the feedback module.

4. The radio frequency chip according to claim 3, wherein the transmission branch comprises a phase shifter and an adjuster, wherein
the phase shifter is configured to perform phase shift processing on the sending signal; and
the adjuster is configured to perform gain adjustment processing on the sending signal.

5. The radio frequency chip according to claim 4, wherein the feedback module comprises a plurality of feedback branches, and the plurality of transmission branches are in a one-to-one correspondence with the plurality of feedback branches;
the plurality of feedback branches are all connected to the first end of a transceiver selection switch, and the second end of the transceiver selection switch is connected to the digital processing unit; and
the transceiver selection switch is configured to select one of the plurality of feedback branches to connect to the digital processing unit.

6. The radio frequency chip according to claim 5, wherein a phase shifter is further comprised between the second end of the transceiver selection switch and the digital processing unit, and the phase shifter is configured to perform phase retrieval on a feedback signal on the feedback branch.

7. The radio frequency chip according to claim 6, wherein an adjuster is further comprised between the second end of the transceiver selection switch and the digital processing unit, and the adjuster is configured to perform gain adjustment processing on the feedback signal on the feedback branch.

8. The radio frequency chip according to claim 4, wherein the feedback module comprises a plurality of feedback branches, the plurality of transmission branches are in a one-to-one correspondence with the plurality of feedback branches, and each of the plurality of feedback branches comprises a phase shifter, wherein
the phase shifter is configured to perform phase retrieval on a feedback signal on the feedback branch.

9. The radio frequency chip according to claim 8, wherein each of the plurality of feedback branches further comprises an adjuster, wherein
the adjuster is configured to perform gain adjustment processing on the feedback signal on the feedback branch.

10. The radio frequency chip according to claim 8 or 9, wherein the feedback module further comprises a combiner, and an end of the feedback branch is connected to the combiner; and
the combiner is configured to combine a plurality of feedback signals on the plurality of feedback branches, and feed back the plurality of feedback signals to the digital processing unit.

11. A method for feeding back a signal by using a radio frequency chip, wherein the radio frequency chip comprises a signal transmission module and a feedback module, and the method comprises:
receiving, via the first end of the signal transmission module, a traffic signal sent by a digital processing unit, wherein an end of the signal transmission module is connected to a transceiver antenna, and is connected to an input end of the feedback module by using a coupler;
transmitting the traffic signal through a transmission channel, and sending the traffic signal through the transceiver antenna, wherein the signal transmission module is configured to provide at least one transmission channel, and the traffic signal comprises a sending signal sent by the digital processing unit; and
obtaining a feedback signal corresponding to the traffic signal, and transmitting the feedback signal to the digital processing unit via the feedback module, wherein the feedback module is configured to provide a feedback channel.

12. A radio frequency system, wherein the radio frequency system comprises a plurality of radio frequency chips, a plurality of combiners, a plurality of frequency mixing units, and a digital processing unit, wherein
the plurality of radio frequency chips and the digital processing unit each comprise a transceiver interface and a feedback interface, the feedback ports of the plurality of radio frequency chips are connected to the feedback interface of the digital processing unit by using a first combiner and a first frequency mixing unit, the transceiver interfaces of the plurality of radio frequency chips are connected to the transceiver interface of the digital processing unit by using a second combiner and a second frequency mixing unit, and the plurality of combiners comprise the first combiner and the second combiner;
the digital processing unit is configured to send a service sending signal to the radio frequency chip through the transceiver interface of the digital processing unit, or receive, through the transceiver interface, a service receiving signal transmitted by the radio frequency chip;
the digital processing unit is further configured to receive, through the feedback interface of the digital processing unit, a feedback signal corresponding to the service sending signal, and perform signal compensation on the service sending signal by using the feedback signal; and
the radio frequency chip is configured to provide a transmission channel and a feedback channel, wherein the transmission channel is for transmitting the service sending signal and/or the service receiving signal, and the feedback channel is for sending, through the feedback interface of the radio frequency chip, the feedback signal corresponding to the service sending signal.
